# EUROPEAN PATENT APPLICATION

(11) **EP 1 748 163 A1**
(43) Date of publication of application: **31.01.2007**
(21) Application number: 05739268.0
(22) Date of filing: 12.05.2005
(51) Int. Cl.: F01N 3/24, B01D 53/94, F01N 3/20, F02D 9/02, F02D 41/08, F02D 41/38, F02M 45/02

(54) **EXHAUST EMISSION CONTROL DEVICE OF INTERNAL COMBUSTION ENGINE**

(30) Priority: 19.05.2004 JP 2004149202
(71) Applicant: Mitsubishi Fuso Truck and Bus Corporation, Tokyo 108-8285 (JP)
(72) Inventor: MURATA, Minehiro, MITSUBISHI FUSO TRUCK & BUS CO., Tokyo 1088285 (JP); TAKEDA, Yoshinaka, MITSUBISHI FUSO T. & BUS CO., TOKYO 1088285 (JP); TSUTSUI, Yasuhiro, MITSUBISHI FUSO T. & BUS CO., Tokyo 1088285 (JP); KONDO, Nobuhiro, MITSUBISHI FUSO TRUCK & BUS CO., Tokyo 1088285 (JP); TAKAHASHI, Yoshinori, MITSUBISHI FUSO T. & BUS CO., Tokyo 1088285 (JP)
(74) Representative: Böck, Bernhard
(86) International application number: PCT/JP2005/008706
(87) International publication number: WO 2005/111388

(57) **Abstract**

There is provided an oxidizing catalyst located in the upstream of the exhaust gas purifying catalyst. The catalyst capacity of the oxidizing catalyst is set so that, in the relationship between a value obtained by dividing exhaust flow velocity by the catalyst capacity (exhaust flow velocity/catalyst capacity) and catalyst activatibility, when the exhaust flow velocity is exhaust flow velocity at the time of idle operation of the internal combustion engine, the catalyst activatibility is maximum (prescribed maximum activation range) and the value obtained by dividing the exhaust flow velocity by the catalyst capacity is maximum or close to the maximum.

## Description

### Technical Field

The present invention relates to an exhaust gas purifying device of an internal combustion engine, and more specifically to technology of improving exhaust gas purifying performance of a diesel engine at low idle operation.

### Background Art

In a vehicle equipped with a diesel engine, the air-fuel ratio in the diesel engine during normal drive is lean, so that NOx is easily produced. Therefore, for the purpose of NOx purification, it has been considered to dispose a NOx catalyst as an exhaust gas purifying catalyst in an exhaust system. Examples of the NOx catalyst include an absorption-type NOx catalyst, a selective catalytic reduction system (SCR system), etc.

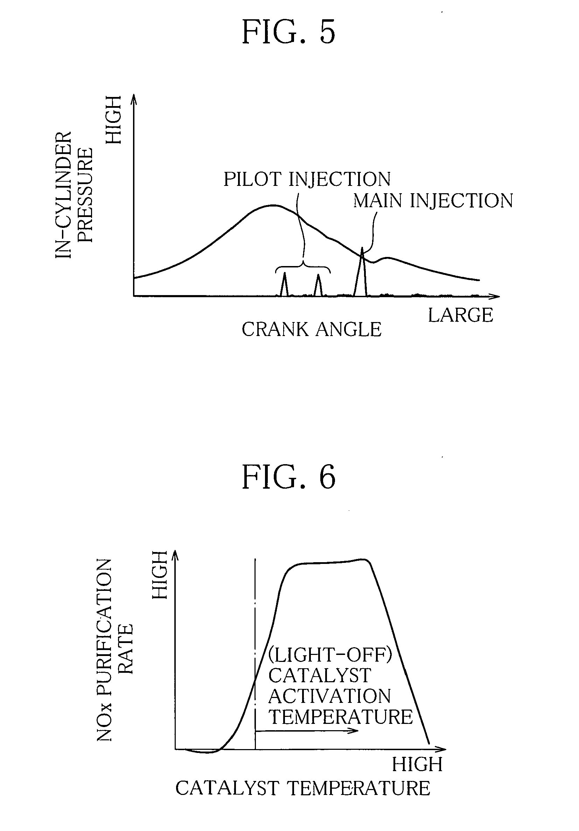

The absorption-type NOx catalyst serves functions in absorbing NOx in an oxidizing atmosphere and in reducing the absorbed NOx in a reducing atmosphere. The NOx-absorbing function and the NOx-reducing function (NOx purification rate) have a characteristic that these functions are not activated (light-off) unless catalyst temperature is a certain temperature or higher temperature as illustrated in FIG. 6.

Therefore, for example, during low idle (normal idle operation) of the diesel engine, a fuel injection amount is extremely small, so that exhaust gas temperature, or catalyst temperature, is liable to be lower than light-off temperature. As a result, the NOx catalyst does not fully carries out its functions during low idle, leading to the problem that the NOx-purifying performance is degraded.

In light of such problem, there is technology that has been developed. According to the technology, an oxidizing catalyst is separately provided in the upstream of the catalyst to be disposed in a position where the exhaust gas temperature is relatively high (for example, near an exhaust manifold or a turbocharger). By using the oxidative reaction heat of the oxidizing catalyst that is easily activated because of a high-temperature atmosphere, the temperature of the exhaust gas purifying catalyst located in the downstream is raised (for example, Unexamined Japanese Patent Application Publication No. 10-159545).

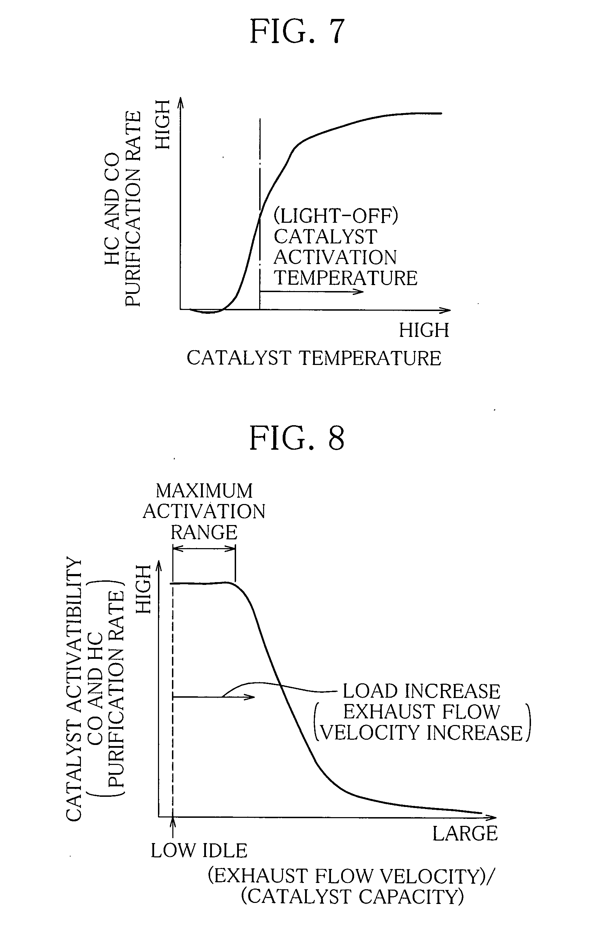

As illustrated in FIG. 7, the oxidizing catalyst has a characteristic that it is not activated (light-off) and it does not provide a sufficient HC and CO purification rate unless the catalyst temperature is equal to or higher than a certain temperature, as in the case of the NOx catalyst. To be specific, the oxidizing catalyst has a characteristic that HC and CO are trapped by absorption till light-off temperature is reached, and oxidative reaction of the trapped HC and CO gradually occurs once the light-off temperature is reached, and then the oxidative reaction of the HC and CO is accelerated as the catalyst temperature is increased.

Such characteristic of the oxidizing catalyst is not a matter, for example, if low idle is maintained and temperature is moderately increased till the oxidizing catalyst is brought into a fully activated state. However, for example, if a state in which the temperature of the oxidizing catalyst is equal to or less than the light-off temperature lasts for a long time, and thereafter the diesel engine is accelerated to increase load and exit the low idle state, the temperature of the oxidizing catalyst is rapidly increased to exceed the light-off temperature along with the load increase. This creates the problem that the oxidative reaction of the trapped HC and CO occurs all at once to generate a large amount of reaction heat, which induces an excessive temperature rise of the oxidizing catalyst.

The greater the catalyst capacity of the oxidizing catalyst is, or the more time it takes before the light-off temperature is reached, the larger the amount of the HC and CO trapped in the oxidizing catalyst is, and the more distinct the above-mentioned problem becomes.

### Disclosure of the Invention

The present invention has been made to solve the above-mentioned problem. It is an object of the invention to provide an exhaust gas purifying device of an internal combustion engine, which is capable of securely maintaining an exhaust gas purifying catalyst at temperature equal to or higher than light-off temperature by using oxidative reaction heat of an oxidizing catalyst disposed in upstream during idle operation, and of preventing an excessive temperature rise of the oxidizing catalyst.

In order to accomplish the above-mentioned object, an exhaust gas purifying device of the present invention comprises an exhaust gas purifying catalyst interposed in an exhaust passage of an internal combustion engine for purifying a harmful component contained in exhaust gas, and an oxidizing catalyst disposed in the upstream of the exhaust gas purifying catalyst, wherein catalyst capacity of the oxidizing catalyst is set so that, in relationship between a value obtained by dividing exhaust flow velocity by the catalyst capacity and catalyst activatibility, when the exhaust flow velocity is exhaust flow velocity at the time of idle operation of the internal combustion engine, the catalyst activatibility is maximum and the value obtained by dividing the exhaust flow velocity by the catalyst capacity is maximum or close to the maximum.

FIG. 8 shows the relationship between the value obtained by dividing the exhaust flow velocity in the oxidizing catalyst by the catalyst capacity (exhaust flow velocity/catalyst capacity) and the catalyst activatibility (CO and HC purification rate). It is apparent from FIG. 8 that the oxidizing catalyst has a characteristic that the catalyst activatibility is great to promote oxidative reaction in a range where the exhaust flow velocity/catalyst capacity is small, but when the exhaust flow velocity/catalyst capacity grows larger and exceeds a certain value, the catalyst activatibility is sharply deteriorated to attenuate the oxidative reaction.
According to FIG. 8, the greater the catalyst capacity of the oxidizing catalyst is in relation to the exhaust flow velocity at the time of idle operation (low idle), the smaller the exhaust flow velocity/catalyst capacity at the time of the idle operation becomes.

However, if the exhaust flow velocity/catalyst capacity at the time of the idle operation is small as described, even if the load of the internal combustion engine is increased (increase in exhaust flow velocity), the catalyst activatibility is great, and a state in which the oxidative reaction is promoted is maintained for a while.

One of the reasons for the above-mentioned problem of the excessive temperature rise of the oxidizing catalyst is because the state in which the oxidative reaction is promoted continues even after the load of the internal combustion engine is increased due to the above-described relationship between the exhaust flow velocity/catalyst capacity and the catalyst activatibility.

The present invention has been made in light of such knowledge. Therefore, according to the invention claimed in claim 1, the catalyst capacity of the oxidizing catalyst disposed in the upstream of the exhaust gas purifying catalyst is set so that, when the exhaust flow velocity is exhaust flow velocity at the time of idle operation of the internal combustion engine, the catalyst activatibility is maximum (for example, prescribed maximum activation range) and the value obtained by dividing the exhaust flow velocity by the catalyst capacity is maximum or close to the maximum.

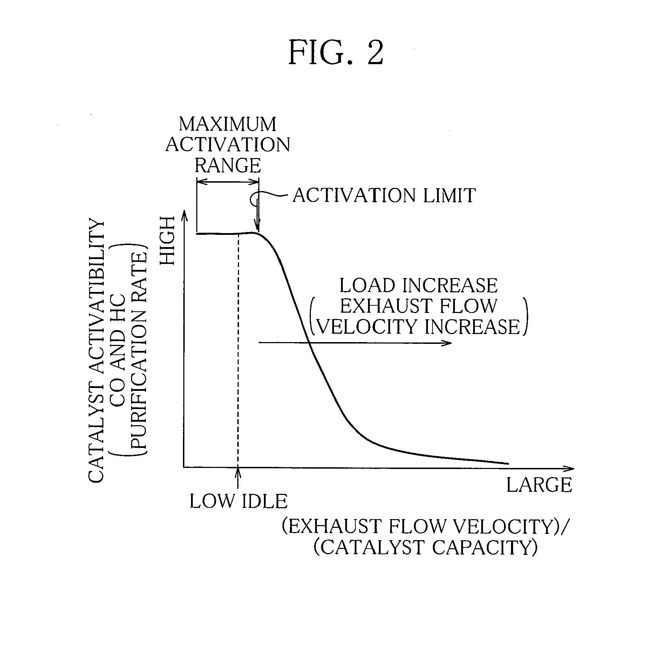

In other words, as illustrated in FIG. 2, the exhaust flow velocity/catalyst capacity is regulated, and the catalyst capacity of the oxidizing catalyst is set so that the exhaust flow velocity/catalyst capacity at the time of the idle operation (low idle) is maximum or close to the maximum within the prescribed maximum activation range of the catalyst activatibility, and more specifically so that the exhaust flow velocity/catalyst capacity is close to a value immediately before it begins to decrease (activation limit).

If the exhaust flow velocity/catalyst capacity is regulated, and the catalyst capacity of the oxidizing catalyst is set as described above, the exhaust gas purifying catalyst is smoothly raised in temperature due to reaction heat of the oxidative reaction of the oxidizing catalyst since the catalyst activatibility is great during the idle operation. On the other hand, when the load of the internal combustion engine grows larger (increase in exhaust flow velocity), the catalyst activatibility is drastically deteriorated, and the oxidative reaction markedly subsides.

As a consequence, the oxidizing catalyst functions almost only during idle operation, and the exhaust gas purifying catalyst is securely maintained at temperature equal to or higher than the light-off temperature during the idle operation. At the same time, if the internal combustion engine is accelerated to increase the load when the temperature of the oxidizing catalyst is equal to or less than the light-off temperature, and exits the idle operation state, for example, as in case that the vehicle is started immediately after an engine is started or as at the time of acceleration after deceleration, the catalyst temperature is raised along with the load increase, while the oxidative reaction in the oxidizing catalyst notably subsides. Accordingly, the HC and the CO, which is trapped by the oxidizing catalyst before the light-off temperature is reached, do not cause oxidative reaction all at once. This suppresses generation of a large amount of reaction heat in the oxidizing catalyst.

### Brief Description of the Drawings

FIG. 1 is a schematic structure view of an exhaust gas purifying device of an internal combustion engine installed in a vehicle according to the present invention;
FIG. 2 is a view showing exhaust flow velocity/catalyst capacity at low idle according to the present invention in relationship between the exhaust flow velocity/catalyst capacity and catalyst activatibility;
FIG. 3 is a flowchart showing a control routine of low idle exhaust gas temperature rise control according to the present invention;
FIG. 4 is a view showing oxidizing catalyst temperature (a) and HC and CO concentration (b) when a throttle valve is closed;
FIG. 5 is a view showing main injection timing and pilot injection timing when fuel injection timing is retarded;
FIG. 6 is a view showing relationship between temperature of a NOx catalyst and a NOx purification rate;
FIG. 7 is a view showing relationship between the temperature of the oxidizing catalyst and a CO and HC purification rate; and
FIG. 8 is a view showing conventional exhaust flow velocity/catalyst capacity at the time of low idle in the relationship between the exhaust flow velocity/catalyst capacity and the catalyst activatibility.

### Best Mode of Carrying out the Invention

An embodiment of the present invention will be explained below with reference to accompanying drawings.

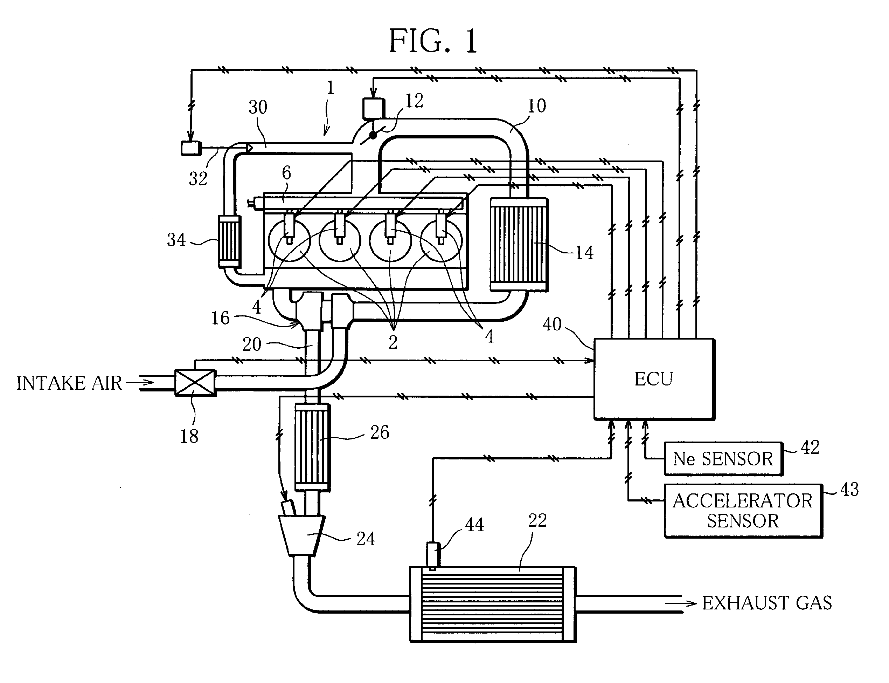

FIG. 1 is a schematic structure view of an exhaust gas purifying device of an internal combustion engine installed in a vehicle according to the present invention. A structure of the exhaust gas purifying device of an internal combustion engine according to the present invention will be explained below with reference to FIG. 1.

As illustrated in FIG. 1, an engine 1 that is an internal combustion engine is, for example, a common rail-type in-line four-cylinder diesel engine. In the common rail-type diesel engine 1, an electromagnetic fuel injection nozzle 4 is disposed in each cylinder to face a corresponding combustion chamber 2. Each of the fuel injection nozzles 4 is connected to a common rail 6 through a high-pressure pipe. Although not shown, the common rail 6 is connected to a high-pressure pump through a high-pressure pipe and is further connected to a fuel tank through a low-pressure pipe. As the engine 1 is a diesel engine, light oil is used as fuel.

An electromagnetic (DC motor-type) throttle valve 12 is interposed in an intake passage 10 of the engine 1. Disposed upstream from the throttle valve 12 is an airflow sensor (AFS) 18 for detecting an intake air amount Qa through an intercooler 14 and a compressor of a turbocharger 16. The throttle valve 12 is formed, for example, of a butterfly valve. As the airflow sensor 18, for example, a hot-wire airflow sensor is employed here, but a Karman Vortex airflow sensor or the like may be employed.

An absorption-type NOx catalyst (exhaust gas purifying catalyst) 22 is interposed in an exhaust passage 20. The absorption-type NOx catalyst 22 contains alkali metal such as potassium (K) or alkali earth metal such as Barium (Ba) serving as a NOx-absorbing agent in addition to a noble metal such as, for example, platinum (Pt). The absorption-type NOx catalyst 22 absorbs NOx (harmful component) contained in exhaust gas in an oxidizing atmosphere where an excess air ratio λ of exhaust gas is high (that is, lean air-fuel ratio). On the other hand, the absorption-type NOx catalyst 22 discharges the absorbed NOx in a reducing atmosphere where the excess air ratio λ of exhaust gas is low (that is, rich air-fuel ratio), and reduces the NOx (hereinafter referred to as NOx purge), to thereby purify the NOx. Because of the noble metal, the absorption-type NOx catalyst 22 has an oxidizing function at the same time and is capable of purifying HC and CO as well.

Disposed immediately upstream of the absorption-type NOx catalyst 22 in the exhaust passage 20 is a reducing agent injector 24 that mixes a reducing agent (light oil or the like) into exhaust gas in order to lower the excess air ratio λ of the exhaust gas during NOx purge.

Interposed upstream from the absorption-type NOx catalyst 22 in the exhaust passage 20 is a miniature oxidizing catalyst 26 so as to be positioned immediately downstream of a turbine of the turbocharger 16. The turbine of the turbocharger 16 is disposed to be positioned immediately downstream of an exhaust manifold, not shown, of the engine 1.

The oxidizing catalyst 26 is a widely used oxidizing catalyst and is constructed to include a noble metal such as platinum (Pt). In this application, the oxidizing catalyst 26 is provided for the purpose of oxidizing treatment of HC, CO and the like contained in exhaust gas and a temperature rise of the absorption-type NOx catalyst 22 located in a downstream due to reaction heat of the oxidative reaction. In other words, the oxidizing catalyst 26 is located near the exhaust manifold, so that it is maintained in an activated (light-off) state due to relatively high exhaust heat even during low idle (idle operation) in which exhaust gas temperature is low. Therefore, the oxidizing catalyst 26 is capable of performing the oxidizing treatment of HC and CO contained in exhaust gas any time. On the other hand, the absorption-type NOx catalyst 22 is located away from the engine 1, so that temperature of the absorption-type NOx catalyst tends to decrease and the absorption-type NOx catalyst tends to be brought out of the light-off state during low idle. In this application, the oxidizing catalyst 26 is disposed in the upstream of the absorption-type NOx catalyst 22 to enable a temperature rise and temperature maintenance of the absorption-type NOx catalyst 22 located in the downstream by using the reaction heat produced by the oxidative reaction of the oxidizing catalyst 26 that is in the light-off state.

There is the following problem in respect of the oxidizing catalyst 26. As stated above, for example, as in case that a vehicle is started right after start of the engine 1 or the like, or as in the case of acceleration after deceleration, if the engine 1 is accelerated to increase load and exits the low idle state when the temperature of the oxidizing catalyst 26 is equal to or less than light-off temperature, the temperature of the oxidizing catalyst 26 rapidly moves up along with the load increase to exceed the light-off temperature. Then, the HC and the CO, which are trapped by the oxidizing catalyst 26 before the light-off temperature is reached, cause oxidative reaction all at once. Consequently, a large amount of reaction heat is suddenly produced, which leads to an excessive temperature rise of the oxidizing catalyst 26.

One of the reasons for such a problem is because, as shown in FIG. 8, the larger catalyst capacity of the oxidizing catalyst is in relation to exhaust flow velocity at low idle, the smaller exhaust flow velocity/catalyst capacity (value obtained by dividing the exhaust flow velocity by the catalyst capacity) at the time of idle operation, and a state in which the oxidative reaction is promoted continues even after the load of the engine 1 is increased due to relationship between the exhaust flow velocity/catalyst capacity and catalyst activatibility (CO and HC purification rate) shown in FIG. 8.

For that reason, in the case of the oxidizing catalyst 26, based upon the relationship between the exhaust flow velocity/catalyst capacity and the catalyst activatibility, the catalyst capacity is set so that, during low idle, the catalyst activatibility is great and the oxidative reaction is promoted, and so that the state in which the oxidative reaction is promoted does not continue when the load of the engine 1 is increased.

More specifically, as illustrated in FIG. 2, the exhaust flow velocity/catalyst capacity is regulated, and the catalyst capacity of the oxidizing catalyst 26 is set so that the exhaust flow velocity/ catalyst capacity at low idle is maximum or close to the maximum within a prescribed maximum activation range of the catalyst activatibility (CO and HC purification rate), that is to say, so that the exhaust flow velocity/catalyst capacity is close to a value immediately before it begins to decrease (activation limit).

To be more specific, as described later, the throttle valve 12 is closed in order to cause the oxidative reaction of as much HC and CO as possible by using the oxidizing catalyst 26 during low idle. If the throttle valve 12 is closed in this way, an exhaust flow rate changes to lower the exhaust flow velocity. In this application, therefore, based upon the exhaust flow velocity in a state where the throttle valve 12 is closed down to prescribed opening, the catalyst capacity of the oxidizing catalyst 26 is set so that the exhaust flow velocity/catalyst capacity at low idle is maximum or close to the maximum within the prescribed maximum activation range of the catalyst activatibility.

If the exhaust flow velocity/catalyst capacity is regulated, and the catalyst capacity of the oxidizing catalyst 26 is set in the aforementioned manner, because the catalyst activatibility is great during low idle as shown in FIG. 2, the absorption-type NOx catalyst 22 located in the downstream is smoothly increased in temperature due to the reaction heat of the oxidative reaction of the oxidizing catalyst 26. As a result, even during low idle, the absorption-type NOx catalyst 22 is maintained at temperature equal to or higher than light-off temperature, and the absorption and discharge/reduction of NOx are properly carried out in the absorption-type NOx catalyst 22, which upgrades NOx-purifying performance. If the engine 1 is increased in load (load increase) and exits the low idle state, the catalyst activatibility is drastically reduced, and the oxidative reaction greatly subsides as shown in FIG. 2. This suppresses the generation of a large amount of reaction heat that is produced by the oxidative reaction of the HC and the CO, which are trapped by the oxidizing catalyst 26 before the light-off temperature is reached, and then prevents the excessive temperature rise of the oxidizing catalyst 26. Consequently, the oxidizing catalyst 26 is extended in duration.

Moreover, if the catalyst capacity of the oxidizing catalyst 26 is set according to the exhaust flow velocity in the state where the throttle valve 12 is closed down to the prescribed opening, the oxidizing catalyst 26 can be miniaturized by setting the catalyst capacity of the oxidizing catalyst 26 to be extremely small. It is then possible to raise the temperature of the oxidizing catalyst 26 up to the light-off temperature in a short period of time even with relatively low-temperature exhaust heat that is produced during low idle. This makes it possible to reduce the amount of the HC and CO trapped by the oxidizing catalyst 26 before the light-off temperature is reached.
As a consequence, the generation of the reaction heat in case that the load of the engine 1 is increased is satisfactorily suppressed correlatively with the subdual of the oxidative reaction.

In the aforementioned case, a carrier of the oxidizing catalyst 26 is preferably formed of a metal carrier having a high heat conduction rate. By so doing, the oxidizing catalyst 26 can be raised in temperature to reach the light-off temperature in a shorter period of time, and the generation of the reaction heat in case that the load of the engine 1 is increased can be further suppressed.

Referring back to FIG. 1, an EGR passage 30 for causing part of exhaust gas to reflow to an intake system as EGR gas stretches from the exhaust manifold. The terminal end of the EGR passage 30 is connected to the intake passage 10 downstream from the throttle valve 12. Interposed in the EGR passage 30 is an electromagnetic (DC motor type) EGR valve 32, opening of which is adjustable to arbitrary opening in order to regulate an EGR gas flow rate. Furthermore, an EGR cooler 34 is also interposed in the EGR passage 30 closely to the exhaust manifold.

An electronic control unit (ECU) 40 is a control device for performing various kinds of control of the vehicle, including fuel injection control of the engine 1 (engine control means), and is made up of an input/output interface, a CPU, a memory, etc. In addition to the airflow sensor 18, various sensors are connected to an input side of the ECU 40, including, for example, a Ne sensor 42 for detecting engine revolution speed Ne from a crank angle of the engine 1, an accelerator sensor 43 for detecting a driver's accelerator operation, a temperature sensor 44 for detecting the temperature of the absorption-type NOx catalyst 22, etc.

Connected to an output side of the ECU 40 are various devices including the fuel injection nozzles 4, the throttle valve 12, the reducing agent injector 24, the EGR valve 32, etc.

Consequently, operation of the various devices is controlled according to input information from the various sensors, and the engine 1 and the vehicle are properly controlled.

Exhaust gas temperature rise control at low idle according to the present invention, which is performed in the exhaust gas purifying device of an internal combustion engine thus constructed, will be explained below.

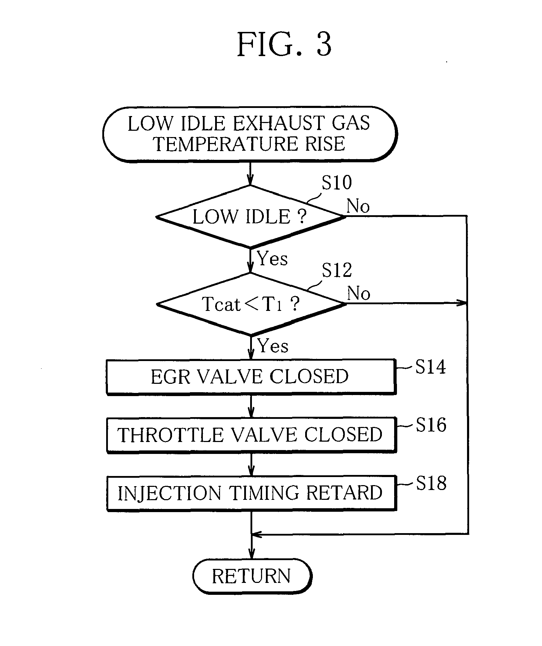

FIG. 3 shows a control routine of the low idle exhaust gas temperature rise control according to the present invention in the form of a flowchart. The description will be provided below with reference to the flowchart.

First, in Step S10, it is determined whether the engine 1 is currently at low idle. To be concrete, based upon the information from the Ne sensor 42, it is determined whether the detected engine revolution speed Ne is revolution speed Ni corresponding to low idle, and whether accelerator opening detected by the accelerator sensor 43 is 0%. If the determination result is false (NO), and it is determined that the engine is not at low idle, the routine is ended. If the determination result is true (YES), and it is determined that the engine is at low idle, the routine advances to Step S12.

In Step S12, it is determined whether temperature T_{cat} of the absorption-type NOx catalyst 22 is lower than light-off temperature T1 of the absorption-type NOx catalyst 22. If the determination result is false (NO), and it is determined that the temperature T_{cat} of the absorption-type NOx catalyst 22 is equal to or higher than the light-off temperature T1, it can be considered that the absorption-type NOx catalyst 22 functions well, and the routine is ended. If the determination result is true (YES), and it is determined that the temperature T_{cat} is lower than the light-off temperature T1, it is judged that the temperature of the absorption-type NOx catalyst 22 needs to be increased, and the routine advances to Step S14.

In Step S14, the EGR valve 32 is closed to prohibit the reflow of the EGR gas to the intake system.

In Step S16, the throttle valve 12 is closed down to the prescribed opening to reduce the intake air amount Qa (throttle control means).

In this manner, when the intake air amount Qa is reduced by the closing operation of the throttle valve 12, pumping loss is increased in the engine 1 since there is no reflow of the EGR gas to the intake system due to the closing of the EGR valve 32. As against this, a fuel injection amount is increased to maintain the low idle state. Furthermore, in the diesel engine 1, there generates a phenomenon that fuel ignition timing is delayed due to a drop in in-cylinder pressure. Because of this phenomenon, the exhaust gas temperature of the engine 1 is increased, and the temperature of the oxidizing catalyst 26 is maintained high.

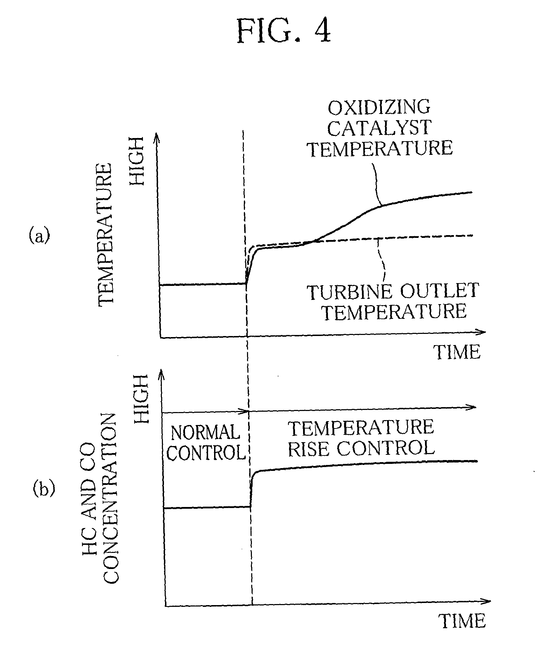

Such delay of the ignition timing slows down combustion. As shown in FIG. 4(b), correlatively with the increase of the fuel injection amount, HC and CO concentration in the exhaust gas is increased, and a reaction heat amount produced by the oxidative reaction of HC and CO in the oxidizing catalyst 26 is increased. As shown by a solid line in FIG. 4(a), as the temperature of the oxidizing catalyst 26 is raised higher than outlet temperature (broken line) of the turbine of the turbocharger 16, the temperature of the absorption-type NOx catalyst 22 rises without fail.

In Step S18, main injection timing of fuel is retarded to be injected by the fuel injection nozzle 4 so that the main injection timing is later than fuel injection timing at normal operation other than low idle (fuel injection control means). Concretely, the fuel injection timing of main injection is retarded from the fuel injection timing at normal operation (for example, 5 degrees after top dead center) to the vicinity of a misfire limit, and is made to be fuel injection timing that is exclusive to low idle (for example, 20 degrees after top dead center).

If the fuel injection timing of the main injection is retarded to the vicinity of the misfire limit in this manner, combustion becomes incomplete, and the HC and CO concentration in the exhaust gas is increased. Then, the reaction heat amount produced by the oxidative reaction of HC and CO in the oxidizing catalyst 26 is further increased, which raises the temperature of the absorption-type NOx catalyst 22 more reliably.

If the fuel injection timing of the main injection is retarded to the vicinity of the misfire limit, fuel ignition is destabilized. This causes a deterioration of combustion or a misfire in the worst case. Therefore, pilot injection is performed right before the main injection at this time (fuel injection control means).

The pilot injection carries out a function as kindling of fuel that is injected by the main injection so that the fuel of the main injection is stably ignited. Accordingly, the pilot injection injects an extremely small amount of fuel as compared to a fuel amount of the main injection.
The pilot injection may be performed only once.
Considering the function as kindling, however, it is preferable that the pilot injection be carried out more than once. In this embodiment, the pilot injection is performed twice, for example. To be specific, as illustrated in FIG. 5, first pilot injection is performed near the top dead center at which the in-cylinder pressure (solid line) becomes maximum, and second pilot injection in the vicinity of 10 degrees after top dead center (double pilot injection).

Consequently, even if the fuel injection timing of the main injection is retarded to the vicinity of the misfire limit, the fuel injected by the main injection is stably and surely combusted, which prevents a misfire and a deterioration of combustion.

As described above, in the exhaust gas purifying device of an internal combustion engine according to the present invention, based upon the exhaust flow velocity in the state where the throttle valve 12 is closed down to the prescribed opening, the catalyst capacity of the oxidizing catalyst 26 is set to be as small as possible so that the exhaust flow velocity/catalyst capacity at low idle is the maximum or close to the maximum within the prescribed maximum activation range of the catalyst activatibility (see FIG. 2). By conducting the low idle exhaust gas temperature rise control, during low idle, the throttle valve 12 is closed down to the prescribed opening, and the fuel injection timing is retarded. By so doing, the temperature rise of the oxidizing catalyst 26 and the oxidative reaction in the oxidizing catalyst 26 are promoted, and the temperature rise of the absorption-type NOx catalyst 22 is also accelerated (see FIG. 3).

In the exhaust gas purifying device of an internal combustion engine according to the present invention, it is possible to make the oxidizing catalyst 26 function effectively only when the engine 1 is at low idle, to increase the temperature of the absorption-type NOx catalyst 22 using the reaction heat of the oxidative reaction of the oxidizing catalyst 26, and to upgrade the NOx-purifying performance by satisfactorily maintaining the temperature of the absorption-type NOx catalyst 22 at temperature equal to or higher than the light-off temperature. It is also possible to greatly attenuate the oxidative reaction in the oxidizing catalyst 26, to suppress the sudden generation of a large amount of reaction heat produced by the oxidative reaction of the HC and the CO, which are trapped by the oxidizing catalyst 26 before the light-off temperature is reached, and to prevent the excessive temperature rise of the oxidizing catalyst 26, in case that the engine 1 is accelerated to increase the load when the temperature of the oxidizing catalyst 26 is equal to or lower than the light-off temperature.

Although the description of the embodiment of the present invention is finished here, an aspect of the invention is not limited to the embodiment.

For example, in the embodiment, the catalyst capacity of the oxidizing catalyst 26 is set on the basis of the exhaust flow velocity in the state where the throttle valve 12 is closed down to the prescribed opening. The throttle valve 12 is closed down to the prescribed opening during low idle by the low idle exhaust gas temperature rise control. However, in a system without the throttle valve 12 or even if the throttle valve 12 is provided to the system, the catalyst capacity of the oxidizing catalyst 26 may be set on the basis of the exhaust flow velocity at normal low idle in which the throttle valve 12 is not closed, and the low idle exhaust gas temperature rise control, namely, the closing operation of the throttle valve 12 and the retard of the fuel injection timing may be omitted. Doing this way still provides a sufficient advantage.

The embodiment has been explained, taking as an example the case in which the oxidizing catalyst 26 is disposed in the upstream of the absorption-type NOx catalyst 22. However, it is not limited to the absorption-type NOx catalyst 22, and any exhaust gas purifying catalyst, for example, a selective catalytic reduction system (SCR system) may be placed in the position of the absorption-type NOx catalyst 22.

Although in the embodiment, both the closing operation of the throttle valve 12 and the retard of the fuel injection timing are performed in the low idle exhaust gas temperature rise control (Step S16 to Step S18), it is possible to carry out only the closing operation of the throttle valve 12. Alternatively, only the retard of the fuel injection timing and the pilot injection may be performed (Step S16 or S18).

According to the embodiment, the closing operation of the throttle valve 12 and the retard of the fuel injection timing are carried out if the temperature T_{cat} of the absorption-type NOx catalyst 22 is lower than the light-off temperature T1 of the absorption-type NOx catalyst 22. The closing operation of the throttle valve 12 and the retard of the fuel injection timing, however, may be performed whenever the engine is at low idle, regardless of the temperature T_{cat} of the absorption-type NOx catalyst 22.

## Claims

1. An exhaust gas purifying device of an internal combustion engine, comprising:
an exhaust gas purifying catalyst interposed in an exhaust passage of an internal combustion engine for purifying a harmful component contained in exhaust gas; and
an oxidizing catalyst disposed in an upstream of the exhaust gas purifying catalyst, wherein:
catalyst capacity of the oxidizing catalyst is set so that, in relationship between a value obtained by dividing exhaust flow velocity by the catalyst capacity and catalyst activatibility, when the exhaust flow velocity is exhaust flow velocity at the time of idle operation of the internal combustion engine, the catalyst activatibility is maximum and the value obtained by dividing the exhaust flow velocity by the catalyst capacity is maximum or close to the maximum.

2. The exhaust gas purifying device of an internal combustion engine according to claim 1, wherein the exhaust gas purifying catalyst includes a NOx catalyst.

3. The exhaust gas purifying device of an internal combustion engine according to claim 1, wherein:
the internal combustion engine is a diesel engine having a throttle valve in an intake system, and includes engine control means that has throttle control means arranged for performing an opening/closing operation of the throttle valve and controls operation of the diesel engine;
the throttle control means closes the throttle valve down to prescribed opening when the internal combustion engine is in the idle operation; and
the catalyst capacity of the oxidizing catalyst is set so that, when the internal combustion engine is in the idle operation and the exhaust flow velocity is exhaust flow velocity in a state where the throttle valve is closed down to the prescribed opening by the engine control means, the catalyst activatibility is maximum and the value obtained by dividing the exhaust flow velocity by the catalyst capacity is maximum or close to the maximum.

4. The exhaust gas purifying device of an internal combustion engine according to claim 3, wherein:
the engine control means further includes fuel injection control means arranged for controlling a fuel injection amount and fuel injection timing; and
when the internal combustion engine is in the idle operation, the fuel injection control means retards the fuel injection timing of main injection to be later than normal timing, and carries out pilot injection in which the fuel injection amount is smaller than that of the main injection immediately before the main injection at least once or more.

5. The exhaust gas purifying device of an internal combustion engine according to claim 4, wherein the fuel injection control means retards the fuel injection timing of the main injection to the vicinity of a misfire limit when the internal combustion engine is in the idle operation.

6. The exhaust gas purifying device of an internal combustion engine according to claim 1, wherein:
the internal combustion engine is a diesel engine, and includes engine control means that has fuel injection control means arranged for controlling a fuel injection amount and fuel injection timing, and that controls operation of the diesel engine; and
when the internal combustion engine is in the idle operation, the fuel injection control means retards fuel injection timing of main injection to be later than normal timing and carries out pilot injection in which the fuel injection amount is smaller than that of the main injection immediately before the main injection at least once or more.
